# EUROPÄISCHE PATENTANMELDUNG

(11) **EP 4 845 017 A1**
(43) Veröffentlichungstag der Anmeldung: **25.11.2026**
(21) Anmeldenummer: 26178093.6
(22) Anmeldetag: 12.05.2026
(51) Int. Cl.: H02N 2/18

(54) **GENERATOR, BATTERIEANORDNUNG UND SENSORKNOTEN, JEWEILS AUF BASIS VON ENERGY HARVESTING AUS VIBRATIONEN**

(30) Priorität: 22.05.2025 DE 102025119917
(71) Anmelder: Diehl Aerospace GmbH, 88662 Überlingen (DE)
(72) Erfinder: Haubrich, Sky, 61118 Bad Vilbel (DE)
(74) Vertreter: Diehl Patentabteilung

(57) **Zusammenfassung**

Ein Generator (2) für elektrischer Energie (E) anhand Energy Harvesting aus Vibrationen (6) eines Untergrundes (4), enthält wenigstens zwei Zellen (14a-c) entlang der Längsachse (12) eines zylindrischen Gehäuses (10), die je zwei Piezoelemente (18a,b) und dazwischen einen ausschließlich entlang der Längsachse (12) bewegbaren Massekörper (22a-c) enthalten, der in einer Ruhelage (R) mit Abstand (A) zu den Piezoelementen (18a,b) federnd vorgespannt ist und durch eine Beschleunigung des Gehäuses (10) aufgrund der Vibration (6) gegen die Piezoelemente (18a,b) anschlagbar ist, wobei die Piezoelemente (18a) als parallel geschaltete Reihenschaltungen (28a) eine Umwandlungselektronik (30) mit der erzeugten Energie (E) speisen, die diese in eine Leistung (P) wandelt und an einem Ausgang (32) bereitstellt.

Eine Batterieanordnung (70) zur Bereitstellung einer aktuellen elektrischen Soll-Leistung (LS) enthält eine Batterie (72) und den Generator (2) und stellt die aktuelle Soll-Leistung (LS) bevorzugt aus dem Generator (2) bereit, und stellt eine aktuelle elektrische Batterieleistung (LB) aus der Batterie (72) nur in ergänzender Menge bereit, wenn die aktuelle Leistung (P) des Generators (2) kleiner als die aktuelle Soll-Leistung (LS) ist.

Ein Sensorknoten (80) enthält die Batterieanordnung (70) und einen ausschließlich von dieser mit elektrischer Soll-Leistung (LS) versorgten Sensor (82) zur Erzeugung eines jeweiligen Sensorsignals (SE).

## Beschreibung

Die Erfindung betrifft die Erzeugung von elektrischer Energie auf Basis von Energy Harvesting aus Vibrationen eines Untergrundes, und die Bereitstellung dieser Energie in Form von elektrischer Leistung.

Aus der DE 10 2008 037 341 A1 ist ein Aufbau zur Energiegewinnung aus Vibrationen bekannt, beispielsweise zum Betrieb autarker Sensoren. Der Aufbau basiert auf einem piezoelektrischen Tonsignalgeber. Diese sind im Gegensatz zu piezoelektrischen Stapeln (Stacks) flach, einfach aufgebaut und vergleichsweise günstig. Der Tonsignalgeber wird mit der vibrierenden Oberfläche verbunden. Um aus der Vibration eine geeignete Stauchung und Streckung des Tonsignalgebers zu erwirken, wird er auf der von der vibrierenden Oberfläche angewandten Seite mit einer im Vergleich zum Tonsignalgeber schweren Masse verbunden.

Aufgabe der vorliegenden Erfindung ist es, Verbesserungen in Bezug auf die Erzeugung von elektrischer Energie auf Basis von Energy Harvesting aus Vibrationen eines Untergrundes und die Bereitstellung dieser Energie in Form von elektrischer Leistung vorzuschlagen.

Die Aufgabe wird gelöst durch einen Generator gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Der Generator ist ein solcher bzw. dient zur Erzeugung von elektrischer Energie und zur Bereitstellung dieser elektrischen Energie in Form von elektrischer Leistung. Die Erzeugung der elektrischen Energie im Generator erfolgt dabei auf Basis von Energy Harvesting. Im Rahmen des Energy Harvesting wird die elektrische Energie aus der mechanischen Energie gewonnen, die Vibrationen eines Untergrundes innewohnt.

In einem Montagezustand und in seinem Betrieb wird bzw. ist der Generator auf dem Untergrund fest angebracht. Der Generator vibriert dann bei auftretenden Vibrationen des Untergrundes zusammen mit diesem. Der Generator gewinnt dann aus diesen / seinen Vibrationen die elektrische Energie und stellt diese als elektrische Leistung bereit. Ein Verbraucher kann die elektrische Leistung dann vom Generator beziehen.

Der Generator enthält ein Gehäuse. Dieses erstreckt sich entlang einer Längsachse. Die Längsachse ist eine Gerade. Das Gehäuse ist an dem Untergrund befestigbar und im Montagezustand und Betrieb an dem Untergrund befestigt. Das Gehäuse weist eine Zylinderform auf, insbesondere eines geraden Kreiszylinders. Das Gehäuse wird auch Korpus genannt.

Der Generator enthält wenigstens zwei Zellen, auch Kammern oder Generatorkammern genannt. Sämtliche Zellen des Generators sind entlang der Längsachse innerhalb des Gehäuses aneinandergereiht angeordnet. Mit anderen Worten weist der Generator also entlang der Längsachse eine sequenzielle Anordnung seiner Zellen hintereinander auf. Insbesondere sind die Zellen hierbei lückenlos aneinandergereiht.

Jede der Zellen weist in Richtung der Längsachse ein erstes Ende oder eine erste Stirnseite und gegenüberliegend ein zweites Ende oder eine zweite Stirnseite auf. Jede Zelle enthält ein erstes und ein zweites Piezoelement. Jedes der Piezoelemente ist im Generator fest in Relation zum Gehäuse fixiert. Die Piezoelemente werden auch Piezogeneratoren genannt. In der Zelle ist das erste Piezoelement dem ersten Ende der Zelle zugewandt angeordnet. Das zweite Piezoelement ist dem zweiten Ende der Zelle zugewandt. Entlang der Längsachse folgen also erstes Ende, erstes Piezoelement, zweites Piezoelement und zweites Ende nacheinander. Bezüglich der Anordnung der Zellen im Gehäuse weisen alle ersten Enden aller Zellen in dieselbe Richtung der Längsachse. Alle zweiten Enden aller Zellen weisen in die entgegengesetzte zweite Richtung der Längsachse. Mit anderen Worten ist also immer ein erstes Ende einer Zelle und ein zweites Ende einer Nachbarzelle benachbart.

Jedes der Piezoelemente ist dazu eingerichtet, auf eine Druckbelastung hin die oben genannte elektrische Energie bzw. einen Anteil dieser zu erzeugen. Die Druckbelastung erfolgt dabei in Richtung der Längsachse. Mit anderen Worten wird das Piezoelement im Betrieb in Richtung der Längsachse komprimiert, um die elektrische Energie zu erzeugen. Die gesamte im Generator erzeugte elektrische Energie summiert sich aus der in den jeweiligen Zellen erzeugten (Anteilen der) elektrischen Energie.

Der Generator weist ein Federlager auf, insbesondere weist jede der Zellen ein Teilelement des Federlagers auf.

Außerdem enthält jede der Zellen einen jeweiligen Massekörper, auch Schwungmasse genannt. In Richtung der Längsachse ist innerhalb jeder Zelle der jeweilige Massekörper jeweils zwischen den beiden Piezoelementen angeordnet. Jeder der Massekörper ist innerhalb der Zelle derart beweglich gelagert, dass er ausschließlich entlang der Längsachse relativ zum Gehäuse bewegbar ist.

Jeder der Massekörper ist innerhalb der Zelle durch das Federlager derart federnd vorgespannt, dass er in einer Ruhelage einen jeweiligen Abstand zu den beiden Piezoelementen aufweist. Der Abstand wird in Richtung der Längsachse betrachtet. Die Ruhelage ist eine solche, wenn der Generator bzw. dessen Gehäuse unbeschleunigt ist, sind insbesondere in Ruhe befindet. Die beiden Abstände A und auch alle Abstände aller Zellen sind in der Ruhelage insbesondere gleich groß, diese könnten jedoch auch innerhalb und/oder zwischen verschiedenen Zellen unterschiedlich groß gewählt sein.

Jeder der Massekörper ist zusammen mit dem Federlager dazu eingerichtet, dass er durch eine bestimmungsgemäße - durch die Vibration verursachte - Beschleunigung des Gehäuses in Richtung der Längsachse aufgrund seiner Massenträgheit gegen jeweils eines der (das jeweilige in Gegenrichtung der Beschleunigung liegende) Piezoelemente anschlagbar ist.

Mit anderen Worten ist der Massekörper in der Ruhelage zunächst also in der entsprechenden Position mit Abstand zwischen den beiden Piezoelementen vorgespannt. Erfährt der Untergrund - insbesondere aufgrund der Vibration - eine Beschleunigung, erfährt auch das darauf angeordnete Gehäuse die Beschleunigung. Betrachtet werden hier nur die Komponenten in Längsrichtung. Die Beschleunigung wird insbesondere durch die oben genannten Vibrationen verursacht und alterniert beim Vibrieren in beiden Richtungen der Längsachse. Bei einer Teilbeschleunigung der Vibration in eine bestimmte Richtung der Längsachse schlägt also der Massekörper in der entgegengesetzten Richtung der Längsachse an das eine Piezoelement an. Bei der anderen Teilbeschleunigung (Gegenphase der Vibration) erfolgt die Beschleunigung in Gegenrichtung und der Körper schlägt an das andere Piezoelement an. Durch die Vibration (Vor- und Zurückbewegung / -beschleunigung des Gehäuses entlang der Längsachse) schlägt der Massekörper also alternierend stets an das erste und zweite Piezoelement an.

"Bestimmungsgemäß" bedeutet dabei, dass der Massekörper und das Federlager hinsichtlich ihrer Dimensionierung, insbesondere Resonanzfrequenz, so bemessen sind, dass bei einer zu erwartenden Vibration / damit einhergehender Amplitude und Frequenz einer entsprechenden Bewegung / Oszillation ein entsprechendes Anschlagen des Massekörpers an den Piezoelementen erfolgt. Insbesondere sind die Größen dabei so gewählt, dass dabei in Bezug auf die Energiegewinnung möglichst viel Energie erzeugt werden kann.

"Bestimmungsgemäß" heißt also, dass der Generator auf bestimmte oder bestimmte Typen von Vibrationen / Untergründen konstruktiv abgestimmt ist und für den Einsatz dort eingerichtet ist; z.B. für die dabei auftretenden / zu erwartenden Amplituden und Frequenzen. Mit anderen Worten werden insbesondere betreffende Vibrationen / Untergründe als bekannt hinsichtlich ihrer Eigenschaften vorausgesetzt, um den Generator darauf abzustimmen.

Alle ersten Piezoelemente sind als eine erste elektrische Reihenschaltung in Reihe geschaltet. Alle zweiten Piezoelemente sind als zweite elektrische Reihenschaltung ebenfalls elektrisch in Reihe geschaltet.

Der Generator enthält eine Umwandlungselektronik. Diese ist insbesondere ebenfalls innerhalb des Gehäuses angeordnet. Die beiden Reihenschaltungen der Piezoelemente sind zur Einspeisung der in bzw. mit diesen erzeugten elektrischen Energie in elektrischer Parallelschaltung zueinander an der Umwandlungselektronik angeschlossen, um die in der jeweiligen Reihenschaltung jeweils erzeugte Energie in die Umwandlungselektronik einzuspeisen.

Die Umwandlungselektronik ist dazu eingerichtet, diese eingespeiste Energie in die elektrische Leistung zu wandeln, die vom Generator abgegeben werden soll / kann.

Der Generator enthält außerdem einen Ausgang. Der Ausgang ist an die Umwandlungselektronik angeschlossen. An dem Ausgang ist die Leistung abgebbar bereitgestellt bzw. dient der entsprechende Ausgang dazu, gegebenenfalls entsprechende Leistung bereitzustellen und auch abzugeben.

Dadurch, dass im Generator in jeder Zelle jeweils zwei Piezogeneratoren in Längsrichtung gesehen zu beiden Seiten des Massekörpers vorgesehen sind, erzeugt der Generator sowohl bei einer ersten, zum Beispiel Aufwärts-Schwingungsbewegung (eine Bewegungsphase der Vibration), und auch bei einer zweiten entgegengesetzten, zum Beispiel Abwärts-Schwingungsbewegung (Gegenbewegung der Vibration) des Generators jeweils elektrische Energie.

In einer bevorzugten Ausführungsform ist wenigstens eines, insbesondere mehrere, insbesondere alle, der Piezoelemente scheibenförmig ausgeführt. Dieses ist dann quer bzw. orthogonal zur Längsachse im Gehäuse angebracht bzw. erstreckt sich scheibenförmig in einer solchen Querebene. So kann eine geometrisch besonders günstige Anordnung der Piezoelemente im Generator erreicht werden.

In einer bevorzugten Ausführungsform sind wenigstens zwei, insbesondere mehrere, insbesondere alle, der Zellen gleich ausgeführt. "Gleiche Ausführung" bedeutet, dass diese zum Beispiel hinsichtlich ihrer Geometrie und / oder Abmessungen und / oder Massekörper und / oder Piezoelemente und / oder Materialien und / oder Massen und / oder der Federlagerung gleich, insbesondere identisch, ausgeführt sind. Somit wird ein hinsichtlich seiner Zellen besonders homogen arbeitender Generator geschaffen.

In einer bevorzugten Ausführungsform weist der Ausgang eine erste Elektrode und eine zweite Elektrode auf, zwischen denen die elektrische Leistung bereitstellbar bzw. im Betrieb bereitgestellt ist, insbesondere in Form einer Gleichspannung. Die erste Elektrode ist an einer ersten der beiden Stirnseiten des Gehäuses in Bezug auf die Längsachse angeordnet. Die zweite Elektrode ist an der anderen Stirnseite angeordnet.

In Verbindung mit der zylinderförmigen Gestaltung des Gehäuses entsteht so ein Generator, der elektrische Anschlusspole nach Art einer handelsüblichen Batteriezelle aufweist, d.h. gegenpolige elektrische Anschlüsse an seinen jeweiligen Stirnseiten aufweist, insbesondere also einen Pluspol und einen Minuspol.

In einer bevorzugten Ausführungsform weist das Gehäuse die Form, insbesondere auch die Größe einer bestimmten, handelsüblichen Batteriezelle auf. Mit anderen Worten entsteht so ein batterieförmiger Generator. Insbesondere ist der Generator nach Art einer standardisierten Batteriezelle ausgeführt, zum Beispiel einer AA- (Mignon-), AAA-(Micro-) oder 18650-Zelle (Durchmesser "18"mm, Länge "65"mm, "0"=Zylinderform). Insbesondere ist diese Ausführungsform dann kombiniert mit der oben genannten Ausführungsform, dass sich die Elektroden an den Stirnseiten befinden.

Somit entsteht ein Generator, der - auch in Bezug auf eine Leistungsabgabe - einer handelsüblichen Batterie (auch Akkumulator) entspricht. Derartige Generatoren können also auch zum Beispiel in entsprechend standardisierte Batteriehalter eingesetzt werden, um die im Generator erzeugte elektrische Leistung abzuführen.

In einer bevorzugten Ausführungsform ist der Generator ein solcher für ein bestimmungsgemäßes Flugzeug. Das Federlager zusammen mit wenigstens einem, insbesondere mehreren oder jedem der Massekörper weist jeweils eine mechanische Resonanzfrequenz (Schwingungsfrequenz) auf. Für wenigstens eine, insbesondere mehrere, insbesondere alle, der Zellen ist die Resonanzfrequenz so gewählt, dass sie gleich einer in dem bestimmungsgemäßen Flugzeug an einem potentiellen Montageort (ist dann der Untergrund, an dem das Gehäuse anzubringen ist) für den Generator typisch auftretenden mechanischen Schwingungsfrequenz, also einer dort zu erwartenden Vibration ist.

Zur Einstellung der Resonanzfrequenz sind insbesondere Federlager und / oder Massekörper so konstruiert und aufeinander abgestimmt, dass die entsprechende mechanische Resonanzfrequenz entsteht. "Bestimmungsgemäß" ist hier sinngemäß zu oben zu verstehen, nämlich dass Eigenschaften des Flugzeuges hinsichtlich Montageort / Untergrund / typisch zu erwartender Frequenz / Amplitude der Vibration usw. bekannt sind.

Mit anderen Worten entspricht also die im Flugzeug typischerweise auftretende Schwingungsfrequenz dann einer Vibrationsfrequenz für den Generator. Die entsprechenden Vibrationen können dann im Generator wegen der Frequenzabstimmung optimal zum Energy-Harvesting genutzt werden. Die typischen Schwingungsfrequenzen sind insbesondere solche, die Turbulenzen im Flug des Flugzeuges entsprechen. Somit steht insbesondere in einem Flugzeug eine besonders effektive Möglichkeit zum Energy Harvesting zur Verfügung.

In einer bevorzugten Ausführungsform enthält der Generator wenigstens eine Trennwand. Diese ist fest im Gehäuse montiert und begrenzt wenigstens eine der Zellen in Richtung der Längsachse. Insbesondere ist die Trennwand - in Richtung der Längsachse gesehen - zwischen zwei der Zellen montiert und begrenzt somit beide an die Trennwand angrenzenden Zellen jeweils in Richtung der Längsachse. Wenigstens eines der Piezoelemente ist dann fest an der Trennwand angebracht. Mit anderen Worten ist so das Piezoelement besonders einfach und wirkungsvoll fest, insbesondere starr mit der Trennwand und dem Gehäuse verbunden. Mit anderen Worten bildet die Trennwand einen Halter für ein oder zwei Piezoelemente einer oder beider benachbarter Zellen.

In einer bevorzugten Variante dieser Ausführungsform weist die Trennwand für wenigstens eines der an dieser befestigten Piezoelemente eine Mulde auf. **In** der Mulde liegt dann das betreffende Piezoelemente ein, schmiegt sich also ebenfalls muldenartig an die Form der Mulde an bzw. in diese ein. Der zugehörige Massekörper, der also gegebenenfalls an das Piezoelement anschlagen kann, weist dann an seinem dem Piezoelement zugewandten Längsende (Ende des Massekörpers in Richtung der Längsachse) eine Gegenform auf, die der Form des in der Mulde einliegenden Piezoelements korrespondiert.

Mit anderen Worten liegen also beim Anschlag des Massekörpers bzw. seines betreffenden Längsendes an dem Piezoelement Massekörper und Piezoelement flächig aneinander an. Dies führt zu einer besonders effektiven Kompression und möglichst großflächigen Kompression des Piezoelements und damit zur Schonung des Piezoelements und Massekörpers sowie zu einer effektiven Energieerzeugung. Insbesondere weist die Mulde die Form einer Kugelkalotte auf, also der Oberfläche eines Kugelsegments oder Kugelabschnitts.

Auch solche kalottenförmigen, also leicht gebogenen / gewölbten Piezoelemente sollen im obigen Sinne noch als "scheibenförmig" verstanden werden.

In einer bevorzugten Ausführungsform ist die Umwandlungselektronik des Generators dazu eingerichtet, die Leistung immer nur dann an dem Ausgang bereitzustellen, wenn eine Mindestmenge erzeugter Energie im Generator vorhanden ist / erzeugt wurde. Die Bereitstellung erfolgt dann durch Aktivieren des Ausgangs. "Aktivieren" ist beispielsweise die Herstellung einer elektrischen Verbindung zwischen dem Ausgang und der Umwandlungselektronik, zum Beispiel durch Schließen eines Schalters.

Die Umwandlungselektronik ist auch dazu eingerichtet, ansonsten (keine Mindestmenge vorhanden) den Ausgang zu deaktivieren.

Durch diese Maßnahmen ist es möglich, immer dann, wenn Spannung/Leistung bereitgestellt wird, auch eine ausreichende elektrische Nenn-Ausgangsspannung mit Toleranzbereich sicherzustellen, mit Hilfe der die elektrische Leistung am Ausgang bereitgestellt wird bzw. ist.

Aus Sicht einer externen Last des Generators wirkt der Generator also wie eine sich selbsttätig ein- (es wurde / wird gerade genügend Energie durch Vibration erzeugt) und ausschaltende (keine oder zu wenig Vibration / keine oder zu wenig Energie) Konstantspannungsquelle. Das Einschalten erfolgt immer dann, wenn genügend elektrische Energie erzeugt wurde bzw. wird, um die geforderte elektrische Leistung bei der gewünschten elektrischen Spannung bereitzustellen. Das Abschalten erfolgt, wenn die entsprechende Leistung nicht bei der erforderlichen Spannung bereitstellbar wäre.

Die Aufgabe der Erfindung wird auch gelöst durch eine Batterieanordnung gemäß Patentanspruch 10. Diese ist eingerichtet bzw. dient zur Bereitstellung einer elektrischen Leistung, jeweils in Höhe einer aktuellen Soll-Leistung. Die Höhe der aktuellen Soll-Leistung kann also über der Zeit variieren.

Die Batterieanordnung enthält wenigstens eine Batterie sowie wenigstens einen der erfindungsgemäßen Generatoren. Die Batterieanordnung ist dazu eingerichtet, die aktuelle Soll-Leistung bevorzugt aus der von den Generatoren aktuell bereitgestellten elektrischen Leistung bereitzustellen. Die Batterieanordnung ist weiter dazu eingerichtet, elektrische Batterieleistung aus der Batterie nur dann und nur in ergänzender Menge bereitzustellen, wenn die vom Generator aktuell bereitgestellte elektrische (Generator-) Leistung kleiner als die aktuelle Soll Leistung ist. Die von der Batterie aktuell bereitgestellte Batterieleistung entspricht dann der Differenz aus aktueller Soll-Leistung und aktueller Generator-Leistung.

Lediglich für den Fall, dass der Generator aktuell keine elektrische Leistung bereitstellt, ist die Batterieanordnung dazu eingerichtet, die elektrische Soll-Leistung ausschließlich als elektrische Batterieleistung aus der Batterie bereitzustellen.

Optional (siehe unten) ist die Batterie aufladbar. Die Batterieanordnung kann dann dazu eingerichtet sein, die Batterie mit zumindest einem Teil der vom Generator bereitgestellten elektrischen Leistung aufzuladen.

Die Batterieanordnung entlastet damit also die Batterie durch den Generator und optional wird die Batterie sogar durch den Generator aufgeladen. Batterie und Generator der Batterieanordnung befinden sich insbesondere auf einer selben Platine, zum Beispiel in Form von Modulen. Alternativ sind Batterie und Generator separat voneinander gehalten und zum Beispiel über Kabel verbunden. Die Batterieanordnung enthält insbesondere ein sogenanntes Batteriemanagementsystem, das die Umschaltung bzw. Leistungsbereitstellung zwischen Batterie und Generator, wie sie oben beschrieben wurde, bewerkstelligt; insbesondere auch die Auf- / Nachladung der Batterie durch den Generator.

Die Soll Leistung ist also diejenige elektrische Leistung, die in einem bestimmten Augenblick aus der Batterieanordnung entnommen wird bzw. entnommen werden soll.

In einer bevorzugten Ausführungsform ist die Batterie innerhalb der Batterieanordnung also durch den Generator bzw. dessen (gegebenenfalls überschüssige) elektrische Leistung aufladbar. In diesem Fall kann die Batterieanordnung insbesondere auch dazu eingerichtet sein, dass die Soll Leistung stets alleine vermittels (nicht unbedingt "aus") der Batterie bereitgestellt wird und der Generator alleine dazu genutzt wird, die Batterie nachzuladen. Mit anderen Worten erfolgt die oben genannte Bereitstellung elektrischer Leistung "aus dem Generator" zur Abgabe als Soll Leistung der Batterieanordnung dann über den Umweg "durch die Batterie". Ein Batteriemanagement-System steuert in diesem Fall dann insbesondere die Nachladung der Batterie aus dem Generator.

Die Aufgabe der Erfindung wird auch gelöst durch einen Sensorknoten gemäß Patentanspruch 12.

Der Sensorknoten enthält die oben genannte Batterieanordnung. Der Sensorknoten enthält außerdem einen Sensor. Dieser ist ausschließlich von der Batterieanordnung mit elektrischer Leistung versorgt. Der Sensor dient bzw. ist eingerichtet zur Erzeugung eines Sensorsignals.

Der Sensorknoten kann einen Anschluss zur Bereitstellung eines Sensorsignals aufweisen, sodass das Sensorsignal zum Beispiel über eine am Anschluss angeschlossene elektrische Leitung vom Sensorknoten abgeführt werden kann. Der Sensorknoten kann jedoch alternativ oder zusätzlich auch ein Mittel zur Übertragung der Sensorinformation nach außerhalb des Sensorknotens aufweisen, zum Beispiel einen drahtlos arbeitenden Sender. So kann auch ein drahtlos arbeitender Sensorknoten geschaffen werden.

Der Sensorknoten ist dank der Batterie energieautark ausgeführt, benötigt also keinerlei Energiezufuhr von außerhalb. Der Sensorknoten ist insbesondere ein Ultra-Low-Power-Sensorknoten. Dieser weist keine elektrische externe Leistungsversorgung auf.

Zum Beispiel bei einem Einsatz in einem Flugzeug benötigt ein derartiger Sensorknoten keine elektrische Versorgung und damit auch keinen elektrischen Anschluss an einem Flugzeugbordnetz. Sämtliche im Sensorknoten benötigte Energie stammt aus der Batterie bzw. dem Generator. Beispiele für solche Sensorknoten sind zum Beispiel drahtlose Temperatursensoren, drahtlose Drucksensoren, drahtlose Feuchtigkeitssensoren oder drahtlose Interaktionssensoren, wie zum Beispiel Druckknöpfe, die ein von einem Nutzer bedienbares Bedienelement enthalten und so eine Interaktion des Nutzers mit einer Gegenstelle erlauben bzw. die Erfassung der entsprechenden Nutzereingabe durch Betätigung des Bedienelements.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Gemäß der Erfindung ergibt sich insbesondere ein hochkompaktes piezoelektrisches Energiegewinnungssystem für autarke Ultra-Low-Power Sensorknoten in der Kabine von Luftfahrzeugen.

Es ergibt sich insbesondere ein hochkompaktes piezoelektrisches Energiegewinnungssystem in Form eines Zylinders, ähnlich einer Batteriezelle. Hochkompakt bedeutet hier, dass kleinster Raum möglichst viel elektrische Energie umsetzen kann. Die Zylinderzellen bestehen aus mehreren isolierten Kammern (Zellen), in denen jeweils zwei Piezogeneratoren (Piezoelemente) eingespannt sind.

Aus der Praxis sind wenige Produkte bekannt, welche elektrische DC-Energie durch piezoelektrische Kristalle gewinnen. Dabei wird jedoch immer nur ein piezoelektrisches Element in diesen Anordnungen verwendet. Das Prinzip der Umwandlung der mechanischen Energie in elektrische Energie bleibt dabei i. d. R. gleich: Energie wird am Eingang gepuffert, umgewandelt und dann abgegeben. Häufig wird ein solches System mit einer weichen Kragarm-Piezozelle realisiert.

Gemäß der Erfindung werden mehrere isolierte Generatorkammern in einem einzigen Gehäuse verwendet und die Synchronizität gleich angeordneter Piezogeneratoren zur Erhöhung der erzeugten Quellspannung (Reihenschaltung) / erzeugten Energie genutzt. Gleichzeitig nutzt diese Anordnung zwei piezoelektrische Elemente pro Generator (pro Zelle), anders als andere aus der Praxis bekannte Entwicklungen und Forschungsprojekte. Durch den zusätzlichen Piezogenerator (in der Zelle) wird sowohl bei einer Aufwärts- als auch Abwärtsschwingung (der Vibration) Energie erzeugt.

Als Vorteile ergeben sich:
- Erhöhte Energieerzeugungsdichte.
- Kompaktere Bauform bei erhöhtem Energieertrag.
- in Kombination mit einem Batteriesystem (Kombination von Generator und Batterie in einer Batterieanordnung) zögert es die Zeit zum Aufladen und Austauschen der Batterie stark hinaus.
- die Erfindung ist speziell für die auftretenden Frequenzen in der Luftfahrt ausgelegt / kann so ausgelegt werden.

Die Erfindung zeichnet sich durch die kompakte Bauform inkl. der Reihen- und Parallelschaltung mehrerer Piezoelemente in mehreren Stufen aus. Darüber hinaus durch die Modularisierung der einzelnen Zellen, welche wieder als Gesamtes kombiniert werden können.

Die Erfindung eignet sich insbesondere
1) im Einsatz für autarke ULP-Sensor-Systeme (Ultra Low Power) in Luftfahrzeugen (Kabine).
2) theoretisch überall, wo Vibrationen mechanisch aufgenommen werden können.

### Zusammenfassend gilt:

Gemäß der Erfindung ergibt sich ein piezoelektrisches Energiegewinnungssystem mit hoher Kompaktheit. Das vorgestellte Energiegewinnungssystem zielt darauf ab, die Lebensdauer von autarken Ultra-Low-Power Sensorknoten zu verlängern, indem es die Notwendigkeit des Aufladens oder Austauschens der Batteriezelle(n) hinauszögert. Das System ist vorwiegend dafür gedacht, neue elektrische Systeme leichter nachrüstbar zu machen. Zum Beispiel müsste ein nachinstallierter drahtloser Temperatursensor keine neuen Leitungen verlegt bekommen. Das System ermöglicht eine flexible und einfache Integration zusätzlicher elektrischer Komponenten, ohne dass aufwendige Umbauten oder Verkabelungen notwendig sind.

Einleitend ist folgendes zu sagen:
(Ultra-Low-Power-)Sensorsysteme (ULP) werden in Luftfahrzeugen eingesetzt, um verschiedene Parameter wie Temperatur, Druck und Feuchtigkeit zu erfassen oder Interaktionspunkte bereitzustellen. Bisher werden diese Sensorknoten i. d. R. direkt an das DC-Bordnetz angeschlossen.

Ein klassisches Retrofitting solcher Systeme könnte neue Kabelbäume erfordern, um die notwendigen Energie- und Datenleitungen bereitzustellen. Ein Retrofitting dieser Sensoren mit batteriebetriebenen Systemen könnte jedoch zu einer erheblichen Reduzierung von Kabeln und Gewicht führen, wenn die Batterien über eine zuverlässige und effiziente Energiequelle verfügen. Die vorliegende Erfindung beschreibt ein neuartiges, parallelisiertes Energiegewinnungssystem, das speziell für den Einsatz in Luftfahrzeugen konzipiert ist, um die Batterien von ULP-Sensorknoten zu entlasten und aufzuladen, wodurch die Lebensdauer bis zur Aufladung oder dem Austausch der Batterie drastisch verlängert werden kann. Durch die Implementierung dieser Erfindung können die Wartungskosten reduziert und die Zuverlässigkeit des Gesamtsystems verbessert werden.

Das Energiegewinnungssystem nutzt eine mehrstufige Anordnung (mehrere Zellen) von piezoelektrischen Generatoren, die in einem batterieähnlichen Gehäuse untergebracht sind. Das Gesamtsystem ist insbesondere auf der Platine mittels geeigneter Module fixiert, um eine stabile und einfache Integration (in bestehende Systeme) zu gewährleisten. Die elektrische Zusammenschaltung ermöglicht es, die erzeugte Energie der einzelnen Generatoren zu summieren, während die unterschiedlichen Piezomaterialien (also die mehreren Piezoelemente) physisch in isolierten Kammern (Zellen) in Reihe angeordnet sind. Diese Konstruktion maximiert die Effizienz der Energieumwandlung und sorgt gleichzeitig für eine kompakte Bauweise, die sich nahtlos in moderne Anwendungen einfügt. Die Unterbringung des Systems in standardisierten Batteriegehäusen ermöglicht die Nutzung bereits geeigneter Verbindungselemente für Platinen, was zu erheblichen Kosteneinsparungen führt. Diese Kompatibilität ermöglicht eine einfache Integration und reduziert den Bedarf an maßgeschneiderten Lösungen, wodurch der Produktionsaufwand minimiert und die Effizienz in der Fertigung gesteigert wird, was letztendlich zu einer wirtschaftlicheren Umsetzung der Erfindung beiträgt.

Es gilt insbesondere folgende Systembeschreibung:
Das erfindungsgemäße Energiegewinnungssystem ist insbesondere für relativ unkritische Anwendungen in den Design Assurance Levels (DAL) E bis D (evtl. auch C) in der Flugzeugkabine konzipiert und nicht für die Avionik vorgesehen. Die Idee besteht darin, dieses Subsystem flexibel in beliebige Sensormodule zu integrieren, entweder direkt auf der Platine als Modul oder physisch separiert über Kabelverbindungen. Diese Integration ermöglicht es, die Vorteile der piezoelektrischen Energiegewinnung in verschiedenen Anwendungen der Kabine zu nutzen.

Die betroffenen Systeme müssen dabei spezifische Voraussetzungen erfüllen: sie müssen extrem stromsparend sein, d. h. eine durchschnittliche Leistungsaufnahme im Mikrowatt-Bereich aufweisen. Zusätzlich müssen sie unabhängig von der Bordversorgung agieren können und benötigen daher eine eigene Batterie zur Stromversorgung. Das primäre Ziel des Energiegewinnungssystems ist es, die Lebensdauer der Batterie zu erhöhen, indem regelmäßig gewonnene Energie zurückgeführt wird. Dies verlängert den Zeitraum bis zum notwendigen Austausch oder Aufladen der Batterie und reduziert dadurch den Wartungsaufwand für den Betreiber des Luftfahrzeuges.

Für einen mechanischen Aufbau des Energiegewinnungsmoduls gilt folgendes:
Insbesondere wird das Gehäuse in Form einer AA-Batterie verwendet. Es ist jedoch wichtig zu betonen, dass das tatsächliche Gehäuse unabhängig hiervon in seiner Geometrie / Abmessungen / Kontakten usw. variieren kann; so könnte beispielsweise auch die Form einer 18650-Zelle oder einer AAA-Batterie zum Einsatz kommen.
Vorteilhaft ist die zylindrische, längliche Bauform, die es ermöglicht, die spezifischen Anforderungen an das Energiegewinnungssystem zu erfüllen und eine flexible Anwendung in verschiedenen Geräten zu gewährleisten.

Der zylindrische Korpus kann in einer bevorzugten Ausführungsform aus einem rostfreien Metall, z. B. Aluminium, bestehen, allerdings in einer alternativen Ausführungsform auch aus einem robusten Kunststoff wie Nylon oder ABS gefertigt sein. Die Wahl des Korpus-Materials ist ansonsten nicht weiter relevant.

Im zylinderförmigen Korpus befinden sich also mehrere mechanisch isolierte Kammern (Zellen), in denen sich jeweils zwei piezoelektrische, insbesondere scheibenförmige Generatorelemente befinden. Die piezoelektrischen Elemente werden dabei insbesondere orthogonal zur Längsrichtung des Zylinders positioniert und fixiert. In Richtung des Kammerinnenraums ist eine Schwungmasse (Massekörper) angeordnet, die durch Federelemente (Federlager) vorgespannt wird. Die Bewegung der Masse ist auf die Zylinderlängsachse beschränkt und weist somit lediglich einen Freiheitsgrad auf. Die Resonanzfrequenz des Energiegewinnungssystems ist insbesondere auf die üblichen Turbulenzen im Flug abgestimmt, um den höchstmöglichen Energieertrag zu erzielen. Zu diesem Zweck werden die Schwungmasse, die Federkonstante sowie die Dämpfungskonstante entsprechend parametrisiert.

Das schwingende Massenelement besitzt insbesondere eine leicht kugelförmige Auswölbung (zur Mulde mit Piezoelement korrespondierende Form), welche sich passgenau in die Mulde der Halterung (Trennwand) der Piezoelemente fügt. Mit anderen Worten wird also eine Mulde zum Einlass der Piezoelemente vorgesehen. Das Material dieser Halterungen ist ultrahart und stoßfest (z. B. aus Titan). Das Bewegungsspiel des dynamischen Massenelements beträgt dabei nur wenige Millimeter. Je nach Richtung der einwirkenden Kraft (Beschleunigung) trifft das Massenelement entweder auf den oberen (z.B. ersten) oder den unteren (dann z.B. zweiten) Piezokristall in jeder Kammer.

Für einen elektrischen Aufbau des Energiegewinnungsmoduls gilt folgendes:
In einer möglichen Ausführungsform sind in dem Zylinder einander gegenüberliegende, längliche Elektroden in Richtung der Zylinderlängsachse angeordnet, so dass sich in einer Draufsicht insgesamt sechs Elektrodenschienen ergeben. Wird ein metallisches Material als Korpus für den Zylinder verwendet, so wird ein Isolator zwischen Zylinderwand und Elektrode eingebracht.

Eine der Schienen führt z.B. das gemeinsame negative Terminal der Piezogeneratoren vom unteren Ende des Zylinders zur Umwandlungselektronik in das obere Ende des Zylinders. Eine weitere Schiene führt das Ground-Potential (GND) der resultierenden Ausgangsspannung wieder (von der Umwandlungselektronik) an das untere Ende des Zylinders (also zu der dortigen Elektrode), damit dieser extern an den gegenüberliegenden Enden (z.B. die Stirnseiten des Zylinders tragen Elektroden) elektrisch angebunden werden kann. D. h. das obere Ende des Zylinders stellt den Pluspol der Generatoreinheit dar, während das untere Ende den Minuspol darbietet.

Lediglich die beiden beschriebenen GND-Schienen verbinden die beiden Enden des Zylinders ohne Unterbrechung in einer Achse. Die anderen Schienen ändern ihre Zylinderseite mit jedem kontaktierten Piezogenerator, sodass insgesamt betrachtet eine Reihenschaltung entsteht (Zwei der Schienen sind also jeweils für eine der Reihenschaltungen zuständig). Mit anderen Worten wechseln also die "Piezo-Leiter" (Leiter, die jeweils die Reihenschaltung bewirken) die "Seiten des Zylinders".

Die in die Generatorkammern ragenden Leitungsschienen können in einer bevorzugten Ausführungsform auch als Zwischenwand im Zylinderkorpus eingebracht werden. Vorrangig für die Erfindung ist die elektrische Verbindung der Komponenten an sich und nicht die tatsächlich umgesetzte Verbindungsart (Leitungsführung etc.).

Betrachtet man das Energiegewinnungssystem in einem seitlichen Querschnitt, so werden alle oberhalb der Kammern platzierten Piezogeneratoren in Reihe verschaltet, da sie bei auftretenden Vibrationen nahezu gleichermaßen angeregt werden und dadurch die resultierende Spannung am Abgriff erhöhen. Die unten gelegenen piezoelektrischen Elemente werden mit einer Phasenverschiebung von 180° angeregt und sind unter sich ebenfalls in Reihe verbunden. Diese beiden Reihenschaltungen werden anschließend elektrisch parallelisiert und in die Umwandlungselektronik eingespeist.

Die Umwandlungselektronik haust insbesondere eingangsseitig einen hocheffizienten Vollbrückengleichrichter mit niedrigem Spannungsabfall ein. Hinter der Gleichrichtungsstufe befindet sich ein Pufferkondensator zur Zwischenspeicherung der eingespeisten elektrischen Energie. Durch die Regelelektronik (Konverter) werden die Ladungen vom Eingangskondensator (erzeugte Energie) auf einen Ausgangskondensator (bereitzustellende Leistung) gebracht und auf die Soll-Ausgangsspannung (z. B. 1,2 V, 3,3 V, 5 V) angehoben oder gesenkt, je nach Größe der Spannung am Eingangskondensator. Es handelt sich um einen DC/DC-Wandler. Bei ausreichender Ladungsmenge wird die gespeicherte Energie über einen Lastschalter an den angeschlossenen Verbraucher freigegeben. Dabei wird sichergestellt, dass die Ausgangsspannung in einem Toleranzbereich um den Sollwert bleibt. Fällt die Ausgangsspannung ab, weil nicht ausreichend Energie auf dem Ausgangskondensator mehr vorhanden ist, wird der Lastschalter wieder geöffnet und der Prozess wiederholt sich. Allerdings kann der Eingangskondensator auch bei geschlossenem Lastschalter weiterhin elektrische Energie aufnehmen und puffern. Aus der Sicht der Last erscheint das Energiegewinnungssystem daher als eine sich ein- und ausschaltende Konstantspannungsquelle.

Für eine Integration in batteriebetriebene Sensorsysteme gilt folgendes:
Durch die Realisierung des Systems in einem genormten Batterie-Gehäuse kann eine unkomplizierte Integration auf einer Leiterplatte erfolgen. Entsprechende festlötbare Halterungen existieren bereits in vielen Variationen auf dem Markt. Obwohl die Batterie inkl. Batterie-Management-System (BMS) nicht Bestandteil der Erfindung in Form des Generators sind, basiert das piezoelektrische Energiegewinnungssystem insbesondere auf der Annahme einer vorhandenen Batterieeinheit. Dabei kann das beschriebene System immer unabhängig von der Art der Batterie oder des Typs bzw. des Funktionsumfangs des BMS verwendet werden. Aus der Sicht der Batterie und des BMS erscheint das Energiegewinnungssystem als externe Spannungsquelle, die in regelmäßigen Zeitabständen ein- und ausgeschaltet wird.

Es ist keine Voraussetzung, das Energiegewinnungssystem via Halterung direkt auf der Platine der autarken Sensoreinheit zu platzieren. Ein bestehendes Sensorsystem kann um das Energiegewinnungssystem erweitert werden, indem es elektrisch sorgfältig an die vorhandene Batterie bzw. dessen BMS angeschlossen wird. Dies könnte bspw. durch geeignete Kabelverbindungen erfolgen. Dabei ist es auch unerheblich, ob sich das Energiegewinnungssystem im gleichen Gehäuse befindet wie die Batterie und/oder die Elektronik.

Ferner ist es möglich, mehr als einen dieser Generatorzylinder in ein Design zu integrieren. Das hier beschriebene Modul (Generator) kann in einer Mehrfachausführung auch parallel zu modellgleichen Modulen betrieben werden. Eine optionale Schutzschaltung am Ausgang jedes Moduls verhindert eine gegenseitige Beeinflussung durch die Parallelschaltung der verschiedenen Energiegewinnungssysteme.

Weitere Merkmale, Wirkungen und Vorteile der Erfindung ergeben sich aus der nachfolgenden Beschreibung eines bevorzugten Ausführungsbeispiels der Erfindung sowie den beigefügten Figuren. Dabei zeigen, jeweils in einer schematischen Prinzipskizze:
- Figur 1: einen Generator auf Basis von Energy Harvesting in einer Prinzipskizze,
- Figur 2: einen Ausschnitt aus dem Generator an der Stelle II aus Figur 1 in größerem Detail,
- Figur 3a: eine Draufsicht auf den Generator aus Figur 1 in Richtung des Pfeils III mit Gehäuse in einer ersten
- Figur 3b: und alternativen zweiten Ausführungsform für die Führung elektrischer Leiter,
- Figur 4: die Umwandlungselektronik des Generators aus Figur 1 in einer Prinzipskizze,
- Figur 5: eine Batterieanordnung mit dem Generator aus Figur 1 in einer Prinzipskizze,
- Figur 6: einen Sensorknoten mit der Batterieanordnung aus Figur 5 in einer Prinzipskizze.

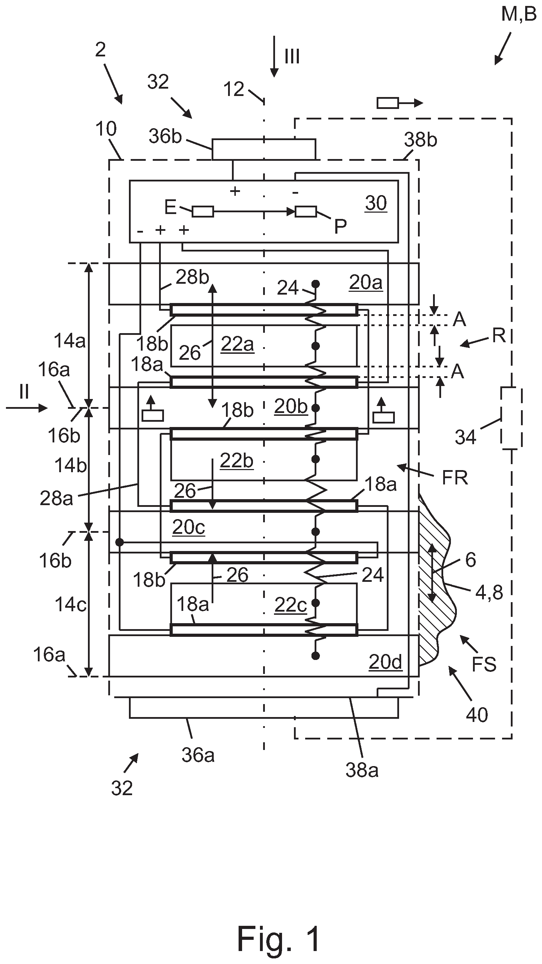

Figur 1 zeigt einen Generator 2. Dieser dient zur Erzeugung elektrischer Energie E und zur Bereitstellung der elektrischen Energie E in Form elektrischer Leistung P. Die Erzeugung der Energie E erfolgt innerhalb des Generators 2 auf Basis von Energy Harvesting aus Vibrationen 6 eines Untergrundes 4, in Figur 1 dargestellt durch einen Doppelpfeil. Im Beispiel ist der Untergrund 4 ein Strukturteil eines nicht weiter dargestellten Flugzeuges 8, hier eines Passagierflugzeuges.

Der Generator 2 enthält ein Gehäuse 10, welches sich entlang einer Längsachse 12, hier einer Geraden, erstreckt. Das Gehäuse 10 ist am Untergrund 4 befestigbar und vorliegend in einem Montagezustand M tatsächlich an diesem befestigt. Das Flugzeug 8 und damit der Generator 2 befinden sich in einem Betrieb B. Die Vibrationen 6 des Untergrundes 4 finden durch den Betrieb B des Flugzeuges 9 tatsächlich statt.

Das Gehäuse 10 weist eine Zylinderform auf, wobei die Längsachse 12 des Gehäuses 10 auch die Längsachse 12 der entsprechenden Zylinderform ist. Vorliegend handelt es sich um einen geraden Kreiszylinder. Das Gehäuse 10 wird auch Korpus genannt.

Der Generator 2 enthält wenigstens zwei, vorliegend drei Zellen 14a-c, die vorliegend Längsabschnitten des Generators 2 entlang der Längsachse 12 entsprechen. Die drei Zellen 14a-c sind entlang der Längsachse 12 innerhalb des Gehäuses 10 aneinandergereiht angeordnet. Das Gehäuse 10 ist vorliegend der besseren Übersichtlichkeit halber nur gestrichelt angedeutet.

Jede der Zellen 14a-cC weist in Richtung der Längsachse ein erstes Ende 16a (in der Figur 1 unten) und ein zweites Ende 16b (in der Figur 1 jeweils oben) auf. Jede der Zellen 14a-c enthält jeweils ein erstes Piezoelement 18a, das dem ersten Ende 16a zugewandt ist, sowie ein zweites Piezoelement 18b, dass dem zweiten Ende 16b zugewandt ist. Daher liegen die Piezoelemente 18b in der Figur 1 jeweils oben und die Piezoelemente 18a jeweils unten in jeder der Zellen 14a-c. Alle Piezoelemente 18 A, B sind jeweils fest in Relation zum Gehäuse 10 im Generator 2 fixiert. Alle Piezoelemente 18a,b sind jeweils scheibenförmig ausgeführt und erstrecken sich quer zur Längsachse 12 und sind auch so fest im Gehäuse 10 angebracht. Alle drei Zellen 14a-c sind gleich ausgeführt.

Das Gehäuse 10 weist hier die Form und die Abmessungen einer handelsüblichen Batteriezelle auf, vorliegend einer standardisierten AA-Zelle (Mignon-Zelle). Das Gehäuse weist insgesamt vier Trennwände 20a-d auf. Alle Trennwände 20a-d sind fest im Gehäuse 10 angebracht. Die Piezoelemente 18a,b sind jeweils an einer der Trennwände 20a-d fest montiert. Die Trennwand 20a begrenzt die Zelle 14a in Richtung der Längsachse 12. Die Trennwand 20b begrenzt die Zellen 14a,b bzw. trennt diese voneinander. Die Trennwand 20c begrenzt und trennt die Zellen 14b,c voneinander. Die Trennwand 20d begrenzt die Zelle 14c.

Alle Piezoelemente 18a,b sind dazu eingerichtet, auf eine Druckbelastung in Richtung der Längsachse 12 hin die elektrische Energie E bzw. einen jeweiligen Anteil der elektrischen Energie E zu erzeugen.

Aufgrund der Anbringung an den Trennwänden 20a-d erfolgt eine Druckbelastung der Piezoelemente 18a jeweils durch einen Druck, der in Figur 1 nach unten gerichtet ist. Die Druckbelastung der Piezoelemente 18b erfolgt durch einen Druck, der in der Figur 1 nach oben gerichtet ist. Der Druck ist also jeweils auf die Trennwände 20a-d hin gerichtet, die das jeweilige Piezoelement 18a,b tragen.

Jede der Zellen 14a-c enthält einen jeweiligen Massekörper 22a-c. Jeder der Massekörper 22a-c ist im Generator 2 so gelagert, dass er ausschließlich relativ zum Gehäuse 10 entlang der Längsachse 12 bewegbar ist. Die Lagerung und Führung erfolgt durch ein hier nur symbolisch in Form von mechanischen Federn angedeutetes Federlager 24. Jeder der Massekörper 22a-c befindet sich in Richtung der Längsachse dabei stets zwischen den beiden Piezoelementen 18a,b der jeweiligen Zelle 14a-c bzw. ist zwischen diesen beweglich, bis er an diese anstößt.

Der Generator 2 enthält also auch das Federlager 24. Das Federlager 24 ist derart ausgeführt / eingerichtet: Durch das Federlager ist in jeder der Zellen 14a-c deren jeweiliger Massekörper 22a-c in einer Ruhelage R federnd gelagert bzw. vorgespannt. In der Ruhelage R ist der Massekörper 22a-c zwischen den beiden Piezoelementen 18a,b der jeweiligen Zelle 14a-c so gehalten, dass er einen jeweiligen Abstand A zu den beiden Piezoelementen 18a,b aufweist. Die entsprechende Ruhelage R ist zur Erläuterung in der Figur 1 beispielhaft nur für die Zelle 14a dargestellt.

Das Federlager 24 ist zusammen mit dem jeweiligen Massekörper 20a-c noch wie folgt eingerichtet: Durch eine bestimmungsgemäße Beschleunigung 26 des Generators 2 in Richtung der Längsachse 12 (deren beide Richtungen) ist der jeweilige Massekörper 22a-c aufgrund seiner Massenträgheit gegen jeweils eines der Piezoelemente 18a,b (je eines für eine der Bewegungsrichtungen) anschlagbar.

Für die Zelle 14b ist in Figur 1 die Situation einer Beschleunigung 26 des Gehäuses 10 nach unten angedeutet. Da der Massekörper 20b praktisch in Ruhe bleibt, schlägt er an das obere, also zweite Piezoelement 18b an. Man könnte auch sagen, der bewegte restliche Generator 10 schlägt mit dem zweite Piezoelement 18b an den im Raum ruhenden Massekörper 20b an.

Für die Zelle 14c ist die Gegenbewegung dargestellt. Hier bewegt sich das Gehäuse 10 in Richtung des Pfeils 26, also in Figur 1 nach oben bzw. wird in diese Richtung beschleunigt. Aufgrund seiner Massenträgheit schlägt der Massekörper 22c dann an das in Figur 1 untere Piezoelemente 18a an.

Tatsächlich erfolgt die Bewegung der Massekörper 22a-c jedoch stets synchron. D.h. sämtliche Massekörper schlagen bei der entsprechenden Beschleunigung 26 entweder gemeinsam an die ersten, hier unteren Piezoelemente 18a oder an die zweiten, hier oberen Piezoelemente 18b an.

Daher sind im Generator 2 alle ersten Piezoelemente 18a in einer ersten elektrischen Reihenschaltung 28a in Reihe geschaltet. Ebenso sind alle zweiten Piezoelemente 18b in einer zweiten elektrischen Reihenschaltung 28b elektrisch in Reihe geschaltet.

Der Generator 2 enthält eine Umwandlungselektronik 30, die hier auch innerhalb des Gehäuses 10 angeordnet ist. Beide Reihenschaltungen 28a,b sind elektrisch parallel an der Umwandlungselektronik 30 angeschlossen (symbolisiert durch gemeinsames "-" und zwei "+"). So wird die jeweils in den Piezoelemente 18a und 18b der jeweiligen Reihenschaltung 28a,b erzeugte elektrische Energie (bzw. deren Anteil) in die Umwandlungselektronik 30 eingespeist.

Die Umwandlungselektronik 30 ist dazu eingerichtet, die eingespeiste Energie E in die elektrische Leistung P zu wandeln und zur Abgabe bereitzustellen.

Der Generator 2 enthält außerdem einen Ausgang 32, der elektrisch an die Umwandlungselektronik 30 angeschlossen ist. An dem Ausgang 32 ist die Leistung P bereitgestellt, sodass sie vom Generator 2 abgegeben werden kann. Dies ist in Figur 1 symbolisch durch einen Verbraucher 34 dargestellt, der elektrisch an dem Ausgang 32 angeschlossen ist.

Der Ausgang 32 weist hierzu eine erste und zweite Elektrode 36a,b auf. Zwischen den beiden Elektroden 36a,b ist die elektrische Leistung P bereitgestellt. Die beiden Elektroden 36a,b sind an den beiden, also der ersten und zweiten Stirnseite 38a,b des Gehäuses 10 angeordnet.

Die entsprechenden Beschleunigungen 26 entstehen im Betrieb durch die jeweilige Hin- und Her-Bewegung des Gehäuses 10 aufgrund der entsprechenden Hin- und Her-Bewegung des Untergrundes 4 aufgrund von dessen Hin- und Her-Vibration 6.

Im Beispiel ist der Generator 2 ein solcher für das Flugzeug 8 als bestimmungsgemäßes Flugzeug. Daher ist die Charakteristik der Vibration 6 des Untergrundes 4 als bestimmungsgemäßem Montageort 40 für den Generator bekannt. Die Vibration 6 ist also eine Vibration, die im Flugzeug 8 bekanntermaßen auftritt.

Das Federlager 24 zusammen mit dem jeweiligen Massekörper 22a-c weist eine bestimmte mechanische Resonanzfrequenz FR ihrer mechanischen Schwingung auf. Diese Resonanzfrequenz FR ist - durch Einstellung der Masse der Massekörper 22a-c und der mechanischen Federeigenschaften des Federlagers 24 - so gewählt, dass sie gleich einer Schwingungsfrequenz FS der Vibration 6 ist, die in dem Flugzeug 8 an dem Montageort 40 für den Generator 2 am Flugzeug 8 im Betrieb B zu erwarten ist.

Die Schwingungsfrequenz FS ist dabei eine solche, die typisch in dem Flugzeug 8, zum Beispiel während dessen bestimmungsgemäßem Betrieb B im Flug auftritt. Der Montageort 40 bzw. die Anbringung des Generators 2 bzw. Gehäuses 10 ist dabei ebenfalls so gewählt, dass die Amplitude der Schwingung oder Vibration 6 in Richtung der Längsachse 12 gerichtet ist. So kann diese Schwingung oder Vibration 6 optimal im Generator 2 bzw. den Massekörpern 22a-c auffangen und genutzt werden und in elektrische Energie E umgesetzt werden.

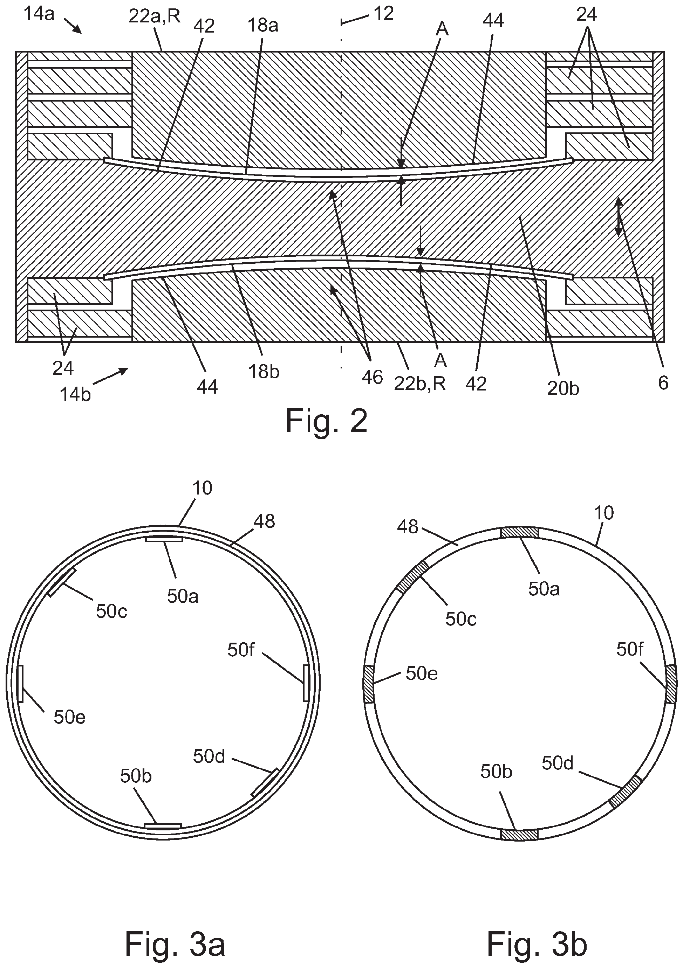

Figur 2 zeigt ein Detail aus Figur 1, welches durch den Pfeil II in Figur 1 angedeutet ist. Die Verhältnisse sind stellvertretend für alle Trennwände 20a-d und somit alle Zellen 14a-c gezeigt. Es zeigt die Trennwand 20b zusammen mit einem jeweiligen Ausschnitt der Massekörper 22a,b, die sich jedoch in Abwandlung zu Figur 1 beide in der Ruhelage R befinden. Das Federlager 24 ist hier so angedeutet, dass es neben der Federung / federnden Lagerung auch die axiale Zwangsführung (einziger Freiheitsgrad) der Massekörper 22a-c in Richtung der Längsachse 12 im Gehäuse 10 bewirkt.

Im Detail ist zu erkennen, dass die Trennwände 20a-d für jedes der Piezoelemente 18a,b jeweils eine Mulde 42 aufweisen, in der das jeweilige Piezoelement 18a,b derart einliegt, dass sie sich an die Mulde 42 bzw. die Trennwände 20a-d anschmiegt.

Die jeweils zu den Piezoelemente 18a,b zugehörigen bzw. diesen zum Anschlag zugeordneten Massekörper 22a-c weisen an ihrem dem jeweiligen Piezoelement 18a,b zugewandten Längsende 44 eine Gegenform 46 zu der Form des in der Mulde 42 einliegenden Piezoelement 18a,b (dessen Anschlag-Oberfläche für den Massekörper 22a-c) auf. So ist sichergestellt, dass bei einem Anschlag der Massekörper 22a-c an den Piezoelemente 18a,b ein flächiges Anlegen bzw. Aufschlagen sichergestellt ist. Damit erfolgt auch eine jeweils gleichmäßige vollflächige Kompression der jeweiligen Piezoelemente 18a,b.

Die Figuren 3a,b zeigen Draufsichten auf den Generator 2 aus Figur 1 in Richtung des Pfeils 3.

Figur 3a zeigt damit dabei eine erste Ausführungsform, bei der innerhalb des Gehäuses 10 bzw. an dessen Innenwand zunächst ein Isolator 48 angebracht ist. An dem Isolator 48 sind elektrische Leiter 50a-f angebracht. Der Leiter 50a ist hierbei ein Masseleiter, der das gemeinsame Massepotential für die beiden Reihenschaltungen 28a,b der Piezoelemente 18a,b darstellt (siehe Figur 1 am Anschluss "-"). Der Leiter 50b ist ebenfalls ein Masseleiter, der das Massepotential des Ausgangs 32 von der Umwandlungselektronik 30 zur Elektrode 36a führt.

Die Leiter 50c,d sind jeweilige Abschnitte der ersten Reihenschaltung 28a, welche nach Passieren eines jeweils kontaktierten Piezoelementes 18a im Gehäuse 10 dessen Seite wechseln, also in einer Querebene auf die andere Seite des Gehäuses 10 führen. Entsprechendes gilt für die beiden Leiter 50e,f in Bezug auf die zweite Reihenschaltung 28b der zweiten Piezoelemente 18b.

Figur 3b zeigt eine alternative Ausführungsform. Hier ist das Gehäuse 10 doppelwandig ausgeführt, mit einem zwischen zwei Teilwänden des Gehäuses 10 eingelagerten Isolator 48 und Leitern 50a-f. Ansonsten gelten sinngemäß die Erläuterungen zu Figur 3a.

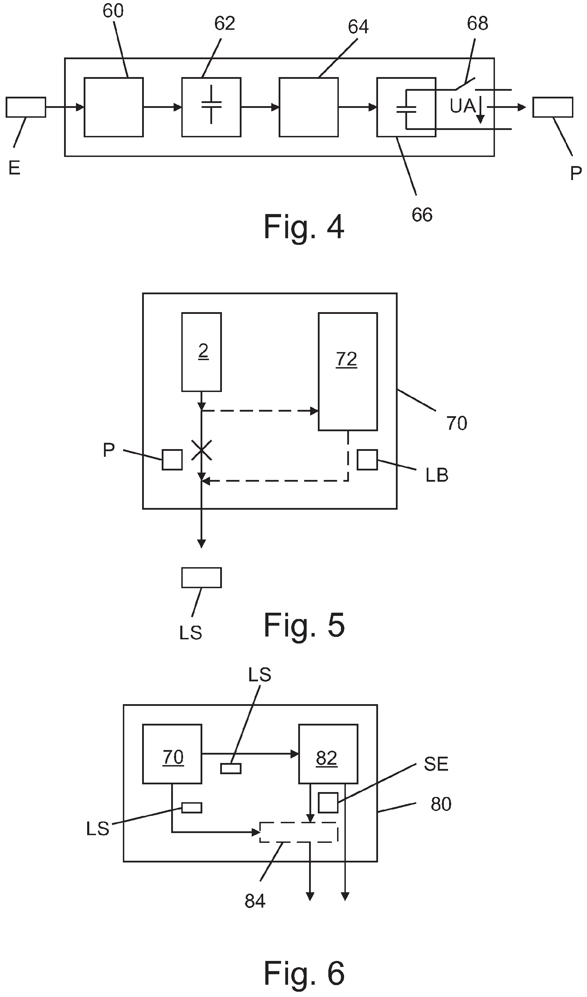

Figur 4 zeigt ein Blockschaltbild der Umwandlungselektronik 30. Die über die Reihenschaltungen 28a,b eintreffende elektrische Energie E trifft zunächst auf einen Gleichrichter 60 und sodann auf einen ersten Energiepuffer 62, in dem die eintreffende Energie E bzw. deren Anteile gespeichert / akkumuliert werden.

Ein Konverter 64 wandelt die Energie E in die abzugebenden Leistung P, die dann in einem zweiten Energiepuffer 66 nochmals zwischengespeichert wird. So kann sie von dort aus am Ausgang 32 wie folgt bereitgestellt und abgegeben werden:
Die Umwandlungselektronik 30 weist zwischen zweitem Energiepuffer 66 und Ausgang 32 einen Schalter 68 auf und ist zu folgendem eingerichtet: Die Leistung P wird immer nur dann durch Schließen des Schalters 68 und damit Aktivieren des Ausgangs 32 bereitgestellt, wenn eine Mindestmenge erzeugter Energie E im Generator 2 vorhanden ist und für die bzw. als Leistung P bereitsteht. Ansonsten bleibt der Ausgang 32 deaktiviert, indem der Schalter 68 geöffnet ist bzw. bleibt.

So kann sichergestellt werden, dass die Leistung P immer in Form einer Nennbeziehungsweise Ausgangsspannung UA mit Toleranzbereich sichergestellt werden kann.

Figur 5 zeigt eine Batterieanordnung 70. Diese dient bzw. ist eingerichtet zur Bereitstellung einer aktuellen bzw. momentanen elektrischen Soll-Leistung LS. Die Batterieanordnung 70 enthält eine Batterie 72 sowie den Generator 2 wie er oben beschrieben wurde. Die Batterieanordnung 72 ist zu folgender Arbeitsweise eingerichtet: Bevorzugt, d.h. möglichst vollständig oder zu einem möglichst großen Anteil, wird die Soll-Leistung LS in Form der Leistung P aus dem Generator 2 bereitgestellt. Elektrische Batterieleistung LB aus der Batterie 72 wird nur dann und nur in der Menge bereitgestellt, dass insgesamt als Summe der Leistung P und der Batterieleistung LB die Soll Leistung LS bereitgestellt ist. Nur, wenn also der Generator 2 in einem bestimmten Zeitabschnitt keine elektrische Leistung P bereitstellt, wird die Soll Leistung LS ausschließlich in Form der Batterieleistung LB bereitgestellt. Um all dies zu veranschaulichen, ist die untere Linie in Figur 5 nur gestrichelt dargestellt.

Die Batterieanordnung ist hier auch noch zu folgendem eingerichtet: In den Zeitabschnitten, in denen der Generator 2 mehr elektrische Leistung P bereitstellt, als aktuell benötigte Soll-Leistung LS aus der Batterieanordnung 70 entnommen wird (oder wenn gar keine Soll-Leistung LS, also Soll-Leistung LS von Null) aus der Batterieanordnung 70 entnommen wird, kann der überschüssige Anteil (elektrische Leistung P minus Soll-Leistung LS) der elektrischen Leistung P in die Batterie 72 eingespeist und dort gespeichert werden (obere gestrichelte Linie in Figur 5). Die Batterie 72 ist also so durch den Generator 2 auch aufladbar bzw. nachladbar.

In einer alternativen Ausführungsform wird die Soll Leistung LS stets aus der Batterie 72 bereitgestellt. Die in Figur 5 durch ein Kreuz markierte Verbindung existiert dann nicht.

Die gesamte elektrische Leistung P des Generators 2 wird dann stets in die Batterie 72 eingespeist und gegebenenfalls "durch die Batterie hindurch" aus der Batterieanordnung 70 abgegeben.

Figur 6 zeigt schließlich einen Sensorknoten 80. Dieser enthält die Batterieanordnung 70 gemäß Figur 5 sowie einen Sensor 82. Der Sensor 82 ist ausschließlich aus der Batterieanordnung 70 jederzeit bzw. aktuell mit der elektrischen Soll-Leistung LS versorgt. Der Sensor 82 dient zur Erzeugung eines Sensorsignals SE.

In einer ersten Ausführungsform, in Figur 6 durch den rechten Pfeil angedeutet, wird das Sensorsignal SE über eine Kabelverbindung aus dem Sensorknoten 80 bereitgestellt.

In einer alternativen Ausführungsform enthält der Sensorknoten 80 außerdem einen Drahtlossender 84. Dieser ist ebenfalls ausschließlich aus der Batterieanordnung 70 zusammen mit dem Sensor 82 mit der Soll-Leistung LS versorgt. In dieser durch die beiden linken Pfeile in Figur 6 angedeuteten Variante wird das Sensorsignal SE also zunächst vom Sensor 82 an den Drahtlossender 84 geliefert. Dieser gibt das Sensorsignal SE dann als drahtloses, zum Beispiel Funksignal, aus dem Sensorknoten 80 aus.

### Bezugszeichenliste

- 2: Generator
- 4: Untergrund
- 6: Vibration (Untergrund)
- 8: Untergrund
- 8: Flugzeug
- 10: Gehäuse
- 12: Längsachse
- 14a-c: Zelle
- 16a,b: erstes, zweites Ende
- 18a,b: erstes, zweites Piezoelement
- 20a-d: Trennwand
- 22a-c: Massekörper
- 24: Federlager
- 26: Beschleunigung
- 28a,b: erste, zweite Reihenschaltung (elektrisch)
- 30: Umwandlungselektronik
- 32: Ausgang
- 34: Verbraucher
- 36a,b: Elektrode
- 38a,b: Stirnseite (Gehäuse)
- 40: Montageort
- 42: Mulde
- 44: Längsende (Massekörper)
- 46: Gegenform
- 48: Isolator
- 50a-f: Leiter (elektrisch)
- 60: Gleichrichter
- 62: Energiepuffer (erster)
- 64: Konverter
- 66: Energiepuffer (zweiter)
- 68: Schalter
- 70: Batterieanordnung
- 72: Batterie
- 80: Sensorknoten
- 82: Sensor
- 84: Drahtlossender

- E: Energie, elektrisch
- P: Leistung, elektrisch
- R: Ruhelage
- A: Abstand
- FR: Resonanzfrequenz
- FS: Schwingungsfrequenz
- UA: Ausgangsspannung
- LS: Soll-Leistung
- LB: Batterie-Leistung
- SE: Sensorsignal
- M: Montagezustand
- B: Betrieb

## Patentansprüche

1. Generator (2) zur Erzeugung von elektrischer Energie (E) auf Basis von Energy Harvesting aus Vibrationen (6) eines Untergrundes (4) und zur Bereitstellung dieser Energie (E) in Form von elektrischer Leistung (P),
- mit einem sich entlang einer Längsachse (12) erstreckenden, an dem Untergrund (4) befestigbaren Gehäuse (10) in Zylinderform,
- mit wenigstens zwei Zellen (14a-c), die entlang der Längsachse (12) innerhalb des Gehäuses (10) aneinandergereiht angeordnet sind,
- wobei jede der Zellen (14a-c) in Richtung der Längsachse (12) ihrem ersten Ende (16a) zugewandt ein erstes (18a) und ihrem zweiten Ende (16b) zugewandt ein zweites Piezoelement (18b) enthält, die jeweils fest in Relation zum Gehäuse (10) fixiert und dazu eingerichtet sind, auf eine Druckbelastung in Richtung der Längsachse (12) hin die elektrische Energie (E) zu erzeugen,
- mit einem Federlager (24),
- wobei jede der Zellen (14a-c) einen Massekörper (22a-c) enthält, der in Richtung der Längsachse (12) innerhalb jeder Zelle (14a-c) jeweils zwischen den beiden Piezoelementen (18a,b) angeordnet ist, und derart beweglich gelagert ist, dass er ausschließlich entlang der Längsachse (12) relativ zum Gehäuse (10) bewegbar ist,
- wobei jeder der Massekörper (22a-c) innerhalb der jeweiligen Zelle (14a-c) durch das Federlager (24) derart federnd vorgespannt ist, dass er in einer Ruhelage (R) einen jeweiligen Abstand (A) zu jedem der beiden Piezoelemente (18a,b) aufweist,
- wobei jeder der Massekörper (22a-c) zusammen mit dem Federlager (24) dazu eingerichtet ist, dass er durch eine bestimmungsgemäße, von der Vibration (6) verursachte Beschleunigung (26) des Gehäuses (10) in Richtung der Längsachse (12) aufgrund seiner Massenträgheit gegen jeweils eines der Piezoelemente (18a,b) anschlagbar ist,
- wobei alle ersten Piezoelemente (18a) als erste elektrische Reihenschaltung (28a) in Reihe geschaltet sind und alle zweiten Piezoelemente (18b) als zweite elektrische Reihenschaltung (28b) elektrisch in Reihe geschaltet sind,
- mit einer Umwandlungselektronik (30), an der die beiden Reihenschaltungen (28a,b) zur Einspeisung der erzeugten Energie (E) elektrisch parallel angeschlossen sind, und die dazu eingerichtet ist, die Energie (E) in die Leistung (P) zu wandeln,
- mit einem an der Umwandlungselektronik (30) elektrisch angeschlossenen Ausgang (32), an dem die Leistung (P) abgebbar bereitgestellt ist.

2. Generator (2) nach Anspruch 1,
**dadurch gekennzeichnet, dass**
wenigstens eines der Piezoelemente (18a,b) scheibenförmig ausgeführt ist und quer zur Längsachse (12) im Gehäuse (10) angebracht ist.

3. Generator (2) nach einem der vorhergehenden Ansprüche,
**dadurch gekennzeichnet, dass**
wenigstens zwei der Zellen (14a-c) gleich ausgeführt sind.

4. Generator (2) nach einem der vorhergehenden Ansprüche,
**dadurch gekennzeichnet, dass**
der Ausgang (32) eine erste (36a) und eine zweite Elektrode (36b) aufweist, zwischen denen die Leistung (P) bereitstellbar ist, wobei die erste Elektrode (36a) an einer der beiden Stirnseiten (38a) des Gehäuses (10) und die zweite Elektrode (36b) an der anderen Stirnseite (38b) angeordnet ist.

5. Generator (2) nach einem der vorhergehenden Ansprüche,
**dadurch gekennzeichnet, dass**
das Gehäuse (10) die Form einer handelsüblichen Batteriezelle aufweist.

6. Generator (2) nach einem der vorhergehenden Ansprüche,
**dadurch gekennzeichnet, dass**
der Generator (2) ein solcher für ein bestimmungsgemäßes Flugzeug (8) ist,
wobei das Federlager (24) zusammen mit wenigstens einem der Massekörper (22a-c) eine mechanische Resonanzfrequenz (FR) aufweist,
und für wenigstens eine der Zellen (14a-c) die Resonanzfrequenz (FR) so gewählt ist, dass sie gleich einer in dem bestimmungsgemäßen Flugzeug (8) an einem potentiellen Montageort (40) als Untergrund (4) für den Generator (2) typisch auftretenden mechanischen Schwingungsfrequenz (FS) der Vibration (6) ist.

7. Generator (2) nach einem der vorhergehenden Ansprüche,
**dadurch gekennzeichnet, dass**
wenigstens eines der Piezoelemente (18a,b) fest an einer fest im Gehäuse (10) montierten, wenigsten eine der Zellen (14a-c) in Richtung der Längsachse (12) begrenzenden Trennwand (20a-d) angebracht ist.

8. Generator (2) nach Anspruch 7,
**dadurch gekennzeichnet, dass**
wenigstens eine der Trennwände (20a-d) für wenigstens eines der Piezoelemente (18a,b) eine Mulde (42) aufweist, in der das Piezoelement (18a,b) einliegt und der zugehörige Massekörper (22a-c) an seinem dem Piezoelement (18a,b) zugewandten Längsende (44) eine zu dem in der Mulde (42) einliegenden Piezoelement (18a,b) korrespondierende Gegenform (46) aufweist.

9. Generator (2) nach einem der vorhergehenden Ansprüche,
**dadurch gekennzeichnet, dass**
die Umwandlungselektronik (30) dazu eingerichtet ist, die Leistung (P)
- immer nur dann durch Aktivieren des Ausgangs (32) bereitzustellen, wenn eine Mindestmenge erzeugter Energie (E) im Generator (2) vorhanden ist
- und ansonsten den Ausgang (32) zu deaktivieren.

10. Batterieanordnung (70) zur Bereitstellung einer aktuellen elektrischen Soll-Leistung (LS),
- mit wenigstens einer Batterie (72),
- und mit wenigstens einem Generator (2) nach einem der vorhergehenden Ansprüche,
- wobei die Batterieanordnung (70) dazu eingerichtet ist,
- die aktuelle Soll-Leistung (LS) bevorzugt aus der von den Generatoren (2) aktuell bereitgestellten elektrischen Leistung (P) bereitzustellen,
- und eine aktuelle elektrische Batterieleistung (LB) aus den Batterien (72) nur in ergänzender Menge bereitzustellen, wenn die von den Generatoren (2) aktuell bereitgestellte Leistung (P) kleiner als die aktuelle Soll-Leistung (LS) ist.

11. Batterieanordnung (70) nach Anspruch 10,
**dadurch gekennzeichnet, dass**
die Batterie (72) durch den Generator (2) aufladbar ist.

12. Sensorknoten (80),
- mit wenigstens einer der Batterieanordnungen (70) nach einem der Ansprüche 10 bis 11,
- und mit wenigstens einem ausschließlich von den Batterieanordnungen (70) mit der elektrischen Soll-Leistung (LS) versorgten Sensor (82) zur Erzeugung eines jeweiligen Sensorsignals (SE).
